# EUROPÄISCHE PATENTSCHRIFT

(11) **EP 1 353 777 B1**
(45) Veröffentlichungstag und Bekanntmachung des Hinweises auf die Patenterteilung: **13.10.2004**
(21) Anmeldenummer: 02701236.8
(22) Anmeldetag: 22.01.2002
(51) Int. Cl.: B24C 3/06, B24C 1/04, B24C 9/00, B24C 5/04

(54) **VERFAHREN UND VORRICHTUNG ZUM STRAHLBEARBEITEN, INSBESONDERE FORMGENAUEN ABTRAGEN UND/ODER VERDICHTEN UND/ODER BESCHICHTEN, VON FESTEN FLÄCHEN**
METHOD AND DEVICE FOR SANDBLASTING, ESPECIALLY REMOVING IN A PRECISE MANNER AND/OR COMPACTING AND/OR COATING SOLID SURFACES
PROCEDE ET DISPOSITIF POUR LE SABLAGE, NOTAMMENT L'ENLEVEMENT ET/OU LE COMPACTAGE ET/OU L'ENDUCTION DE SURFACES FIXES, AVEC UN SUIVI PRECIS DE LEUR FORME

(30) Priorität: 23.01.2001 DE 10102924
(43) Veröffentlichungstag der Anmeldung: 22.10.2003
(73) Patentinhaber: Pieper Innovationsgesellschaft mbH, 03222 Lübbenau (DE)
(72) Erfinder: PIEPER, Gerard, 03222 Lübbenau (DE)
(74) Vertreter: Hannig, Wolf-Dieter, Dipl.-Ing.
(86) Internationale Anmeldenummer: PCT/DE2002/000252
(87) Internationale Veröffentlichungsnummer: WO 2002/058887

(56) Entgegenhaltungen:
- EP-A- 0 511 636
- CA-A- 1 200 391
- CH-A- 329 835
- DE-A- 19 614 555
- DE-A- 19 747 838
- NL-A- 9 400 371
- US-A- 2 766 557

## Beschreibung

Die Erfindung betrifft ein Verfahren zum Abtragen und/oder Verdichten und/oder Beschichten, von festen Flächen, beispielsweise Entfernen von Lackfehlstellen aus Lackierungen, Glätten von Löt- und Schweißnähten, Abtragen von kontaminierten Betonschichten oder Rostschichten, Härten oder Einebnen von Metallflächen, bei dem ein Strahlmittel in einen durch Unterdruck erzeugten Trägerluftstrom mittels Schwerkraft und/oder Injektorwirkung zudosiert, in einem Schlauchleitungssystem zu einer Strahllanze befördert und auf eine durch eine Strahlkammer unter Unterdruck gesetzte Bearbeitungsfläche gelenkt, von dort in den Luftstrom zurückbefördert, gereinigt und ggf. im Kreislauf gefahren wird, wobei die Beschleunigung des Strahlmittels durch den Unterdruck erzeugt und die Strahlkammer von Bearbeitungsfläche zu Bearbeitungsfläche verschoben wird.

Die Erfindung betrifft auch eine Vorrichtung zur Durchführung des Verfahrens mit mindestens einen Behälter für die Bevorratung eines Strahlmittels, einer an den Behälter angeschlossenen Dosier- und/oder Injektoreinrichtung zum Dosieren des Strahlmittels in einen von einem Saugaggregat erzeugten Unterdruckluftstrom, einer mit der Dosier- und/oder Injektoreinrichtung verbundenen Schlauchzuleitung zum Transport des Strahlmittels-Luftstromes in eine zu einer unter Unterduck gesetzten Strahlkammer geführten Strahllanze mit Düse zum Bestrahlen der Bearbeitungsfläche und einer an die Strahlkammer angeschlossenen Schlauchableitung zum Absaugen des Strahlmittels und der abgetragenen Teilchen aus der Strahlkammer in einen Abscheidebehälter und einen Filter; der mit dem Saugaggregat verbunden ist.

Aus der DE 197 47 838 A1 ist ein Verfahren zum trockenen Entfernen von Beschichtungen, Graffiti oder sonstigen oberflächlichen Verunreinigungen auf ebenen oder gekrümmten Flächen bekannt. Ein abrasives oder sanftes Strahlmittel wird in einen in einem Schlauchleitungssystem geführten Tragluftstrom eingebracht, durch diesen befördert, beschleunigt und gegen die zu behandelnde Fläche geschleudert.
Das Strahlmittel wird dann durch den erzeugten Unterdruck von 50 bis 300 mbar in den Tragluftstrom zurückbefördert, in einer Reinigungsvorrichtung gereinigt und dem Tragluftstrom erneut zudosiert, so dass eine Kreislauffahrweise realisiert wird. Das Strahlmittel-Luftgemisch wird vor seinem Auftreffen auf der zu behandelnden Fläche in einer geradlinig verlaufenden Beschleunigungsbewegung auf eine Strahlgeschwindigkeit von 20 bis 80 m/s beschleunigt, wobei die Beschleunigung durch eine Durchmesserverringerung von der Zuleitungsstrecke auf die Beschleunigungsstrecke erreicht wird.
Die mittels dieser Durchmesserverringerung erzielbare Strahlgeschwindigkeit reicht zwar aus, um eine abrasive Wirkung gegenüber Graffiti oder anderen oberflächlichen Verunreinigungen zu erzielen. Für das Abtragen oder Einebnen harter Oberflächen wie beispielsweise Löt- und Schweißnähte sind die erzielbaren Strahlgeschwindigkeiten zu gering, so dass das bekannte Verfahren unwirtschaftlich ist. Dies trifft auch auf die Entrostung von metallischen Flächen oder den Abtrag kontaminierter Betonschichten zu.
Der nach der DE 197 47 838 A1 erreichte Energieeintrag ist andererseits viel zu hoch, wenn punktuelle Einschlüsse in Lackschichten entfernt werden sollen. Mehrschichtige Lackschichten sind bekanntlich bis zu 150 µm dick und bestehen von außen nach innen gesehen aus einer Klarlack- und einer Basislackschicht, einem Füller und einer Grundierungsschicht. Insbesondere bei Metallic-Lackierungen von Autokarosserieteilen, treten Fehlstellen in der Lackierung auf, die vor allem durch punktuelle oder auch flächige Einschlüsse in der Klarlack- oder Basislackschicht verursacht werden. Diese Fehlstellen führen zu aufwendigen und teuren Nacharbeiten, weil die Durchmesserverringerung nur eine begrenzte Regulierung der Strahlgeschwindigkeit ermöglicht, so dass einerseits bei zu hoch gewählter Auftreffenergie der Strahlteilchen, die gesamte Lackierschicht zerstört bzw. beeinträchtigt oder bei zu geringer Auftreffenergie die Nacharbeit unwirtschaftlich wird.

Nach der DE 196 14 555 A1 ist eine Vorrichtung zum abrasiven Strahlen von Werkstücken mit einer allseitig im wesentlichen luftdicht geschlossenen Kammer mit mindestens einer, vorzugsweise mehreren verschließbaren Öffnungen bekannt, wobei die Kammer evakuierbar ist, mit einem Behälter zur Aufnahme von Strahlmittel, mit einer Strahlrohreinheit, die über eine der verschließbaren Öffnungen in die Kammer einführbar ist und die einen Zulaß für das Strahlmittel, einen Zulaß für Luft und eine Austrittsöffnung für das Strahlmittel aufweist, wobei der Zulaß für das Strahlmittel über eine Zuführleitung mit dem Strahlmittelbehälter verbindbar ist.
Diese Lösung verwendet eine Strahllanze zur Zuführung des Strahlgutes mit einer Öffnung für Luft, deren Funktion in der Ansaugung von Strahlmittel besteht. Die Strahllanze hat einen gleichbleibenden Durchmesser und besitzt auch keinen zusätzlichen Injektor innerhalb des Strahllanzenkörpers. Diese bekannten Lösung ist deshalb auch nicht dazu geeignet, entsprechende hohe Strahlgeschwindigkeiten für den Abtragund/oder Verdichtungs- und/oder Beschichtungsprozess zu realisieren. Alle bereits genannten Nachteile treffen demzufolge auch auf diesen Stand der Technik zu.

Bei diesem Stand der Technik liegt der Erfindung die Aufgabe zugrunde, ein Verfahren und eine Vorrichtung der eingangs genannten Art derart zu verbessern, dass die Strahlgeschwindigkeit signifikant erhöht und trotzdem die mit dem Strahlmittel in die Bearbeitungsfläche eingetragene Energiemenge für unterschiedlichste Anwendungsgebiete in weiten Grenzen bei geringem Energieeinsatz, hoher Flexibilität und umweltgerechter Zurückgewinnung und Wiederverwendung des Strahlmittels wirtschaftlich einstellbar bleibt.

Diese Aufgabe wird durch ein Verfahren der eingangs genannten Gattung mit den kennzeichnenden Merkmalen des Anspruches 1 und durch eine Vorrichtung mit den Merkmalen des Anspruches 12 gelöst.
Vorteilhafte Ausgestaltungen des Verfahrens und der Vorrichtung sind den Unteransprüchen entnehmbar.

Das erfindungsgemäße Verfahren zeichnet sich vor allem dadurch aus, dass die Geschwindigkeit der Strahlmittel in Abhängigkeit von der Art und Form der Bearbeitungsfläche und des Strahlmittels, vom Beladungsgrad des Trägerluftstromes mit Strahlmittel, vom Unterdruck im Trägerluftstrom, von der Strahlzeit und der Strahltemperatur in weiten Grenzen, beispielsweise zwischen >80 und 1000 m/s, regulierbar ist. So kann das erfindungsgemäße Verfahren zum Entfernen von Fehlstellen aus Lackierungen, zum Glätten und Einebnen von Lötnähten oder beispielsweise zum Abtragen von kontaminierten Betonschichten bzw. zum Verdichten oder Beschichten von Oberflächen gleichermaßen eingesetzt werden.

Die erfindungsgemäße Vorrichtung zur Durchführung des Verfahrens ist einfach, aber zugleich robust im Aufbau. Sie arbeitet mit einem Tragluftstrom von 0,1 m³/h bis 5000 m³/h.

Weitere Vorteile und Einzelheiten ergeben sich aus der nachfolgenden Beschreibung unter Bezugnahme auf die beigefügten Zeichnungen.

Die Erfindung soll nachstehend an mehreren Ausführungsbeispielen näher erläutert werden.

Es zeigen:
- Fig. 1: ein Funktionsschema des erfindungsgemäßen Verfahrens,
- Fig. 2: eine Schnittdarstellung durch den Injektor in der Schlauchzuleitung,
- Fig. 3: eine Prinzipdarstellung einer erfindungsgemäßen Vorrichtung zum Entfernen punktueller Fehlstellen in Lackschichten,
- Fig. 4: eine Ansicht der Strahlkammer, Strahllanze, Strahlblende und Magnetfolie nach Fig. 3,
- Fig. 5: eine Prinzipdarstellung einer Erfindungsgemäßen Vorrichtung zum Glätten von Lötnähten,
- Fig. 6: eine Ansicht der Strahlkammer, Strahllanze und Maske nach Fig. 5 und
- Fig. 7: einen Schnitt durch eine zwei Blechteile verbindende Lötnaht mit aufgesetzter Strahlkammer.

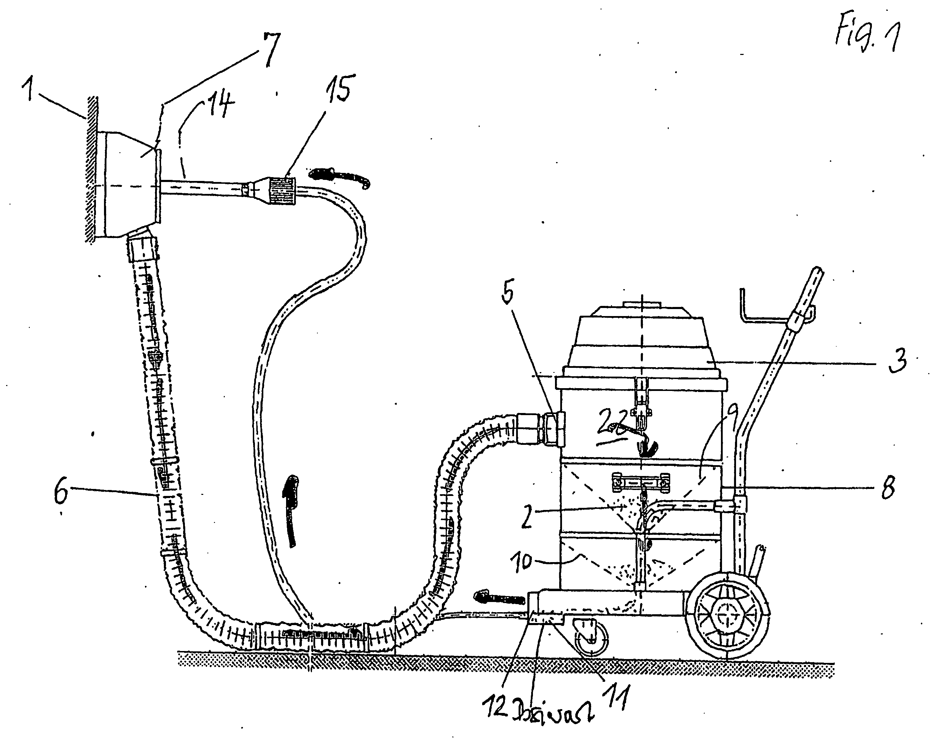

Die Figur 1 zeigt ein prinzipielles Funktionsschema des erfindungsgemäßen Verfahrens zum Strahlbehandeln einer senkrechten ebenen Bearbeitungsfläche **1** mit einem Strahlmittel **2.** Als Strahlmittel **2** wird Glasbruch, Korund, Zirkonsand, feinkörnige Schlacke oder Stahlpartikel verwendet.
Mit einem Saugaggregat **3** wird ein Tragluftstrom **4** mit einer Luftleistung von 0,1 m³/h bis 5000 m³/h erzeugt. Der Saugstutzen **5** des Saugaggregates **3** ist mit einer Schlauchableitung **6** verbunden, die zu einer Strahlkammer **7** führt. Mit dem Saugaggregat **3** wird ein Unterdruck von >150 bis zu 1000 mbar erzeugt. Im Behälter **8** befinden sich zwei senkrecht übereinander angeordnete Schütt-Trichter **9** und **10,** die pneumatisch voneinander getrennt sind. Das Strahlmittel **2** gelangt durch die Schwerkraft aus dem Schutt-Trichter **9** in den Schutt-Trichter **10** und von dort in eine Dosiereinrichtung **11** mit horizontal liegendem Dosierinjektor **12,** der mit der Schlauchzuleitung **13** verbunden ist. Durch den anliegenden Unterdruck wird das Strahlmittel **2** angesaugt, das zusammen mit dem Tragluftstrom in der flexiblen Schlauchzuleitung **13** einer Strahllanze **14** zuströmt, die in die Strahlkammer **7** führt. Aus der Strahlkammer **7** wird das Strahlmittel-Luft-Abtragteilchen-Gemisch durch die Schlauchableitung **6** einem Abscheider bzw. Zyklon **22** zugeführt, in dem eine Abtrennung des Strahlmittels vom Tragluftstrom durchgeführt wird, bevor durch einen Filter die Abtragteilchen aus dem Tragluftstrom abgetrennt werden und letzterer dem Saugaggregat **3** zugeführt wird.

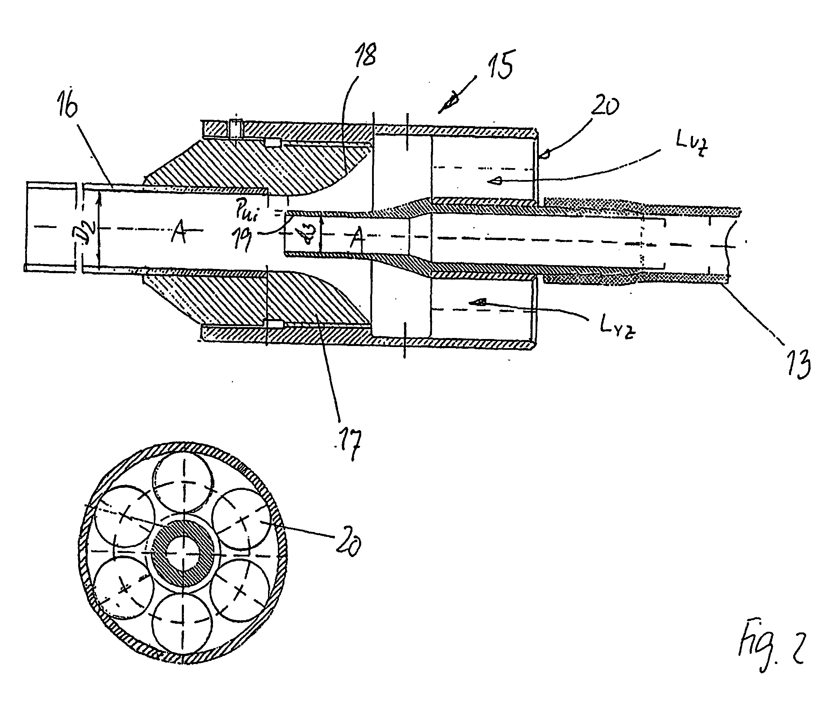

Fig. 2 zeigt einen Schnitt durch den in die Schlauchzuleitung **13** eingesetzten Injektor **15**, dessen Mischrohr **16** in die Strahlkammer **7** führt. Der Injektor **15** besteht aus einem Düsenkörper **17** mit einer konisch sich verengenden in das Mischrohr **16** führenden Eintrittöffnung **18**. Das Ende **19** der Schlauchzuleitung **13** ist mittig auf der Düsenkörperachse **A-A** angeordnet und endet im Bereich der größten Querschnittsverengung des Düsenkörpers **17.** Koaxial zur Schlauchzuleitung **13** sind Ansaugöffnungen als Ansaugring **20** zum Ansaugen von Atmosphärenluft angeordnet. Das Mischrohr **16** hat etwa einen 2fach größeren Durchmesser **D**_{**2**} gegenüber dem Durchmesser **d**_{**3**} des Endes **19** der Schlauchzuleitung **13,** so dass der über den Ansaugring **20** geförderte Luftstrom **L**_{**VZ**} einen Unterdruck **P**_{**UI**} erzeugt, der das Tragluft-Strahlmittel-Gemisch aus der Schlauchleitung **13** zusätzlich durch die Ansaugöffnungen **20** ansaugt und beschleunigt.

Der Luftstrom **L**_{**VZ**} wirkt auf das Tragluft-Strahlmittel-Gemisch wie ein Energieimpuls geschwindigkeitserhöhend. Dadurch werden Strahlgeschwindigkeiten von bis zu 1000 m/s erreicht.

Je nach den in Abhängigkeit des Materials der Bearbeitungsfläche und der Art und Form des Strahlmittels lassen sich durch Regulierung der Luftmenge L_{VZ} die Variation des anliegenden Unterdruckes, der Strahlzeit, der Strahltemperatur und den geometrischen Verhältnissen am Injektor **15** die Strahlgeschwindigkeiten entsprechend den vorliegenden Bearbeitungsaufgaben einstellen. Alle wesentlichen Bauteile der erfindungsgemäßen Vorrichtung lassen sich entsprechend den Anwendungsfällen baukastenmäßig zusammensetzen.

### Beispiel 1

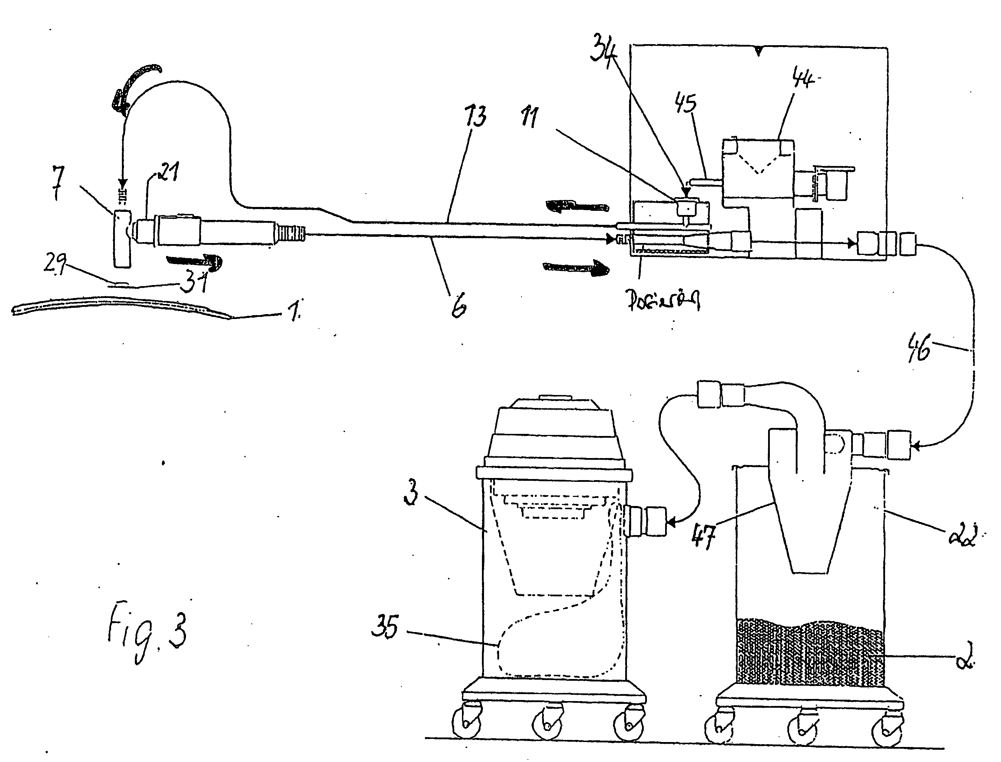

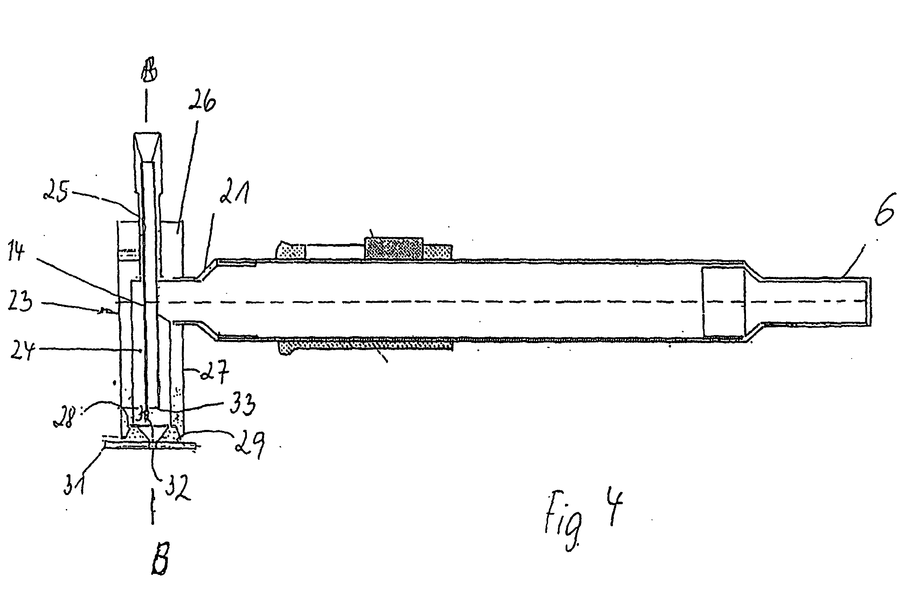

Aus einer Lackierung eines Autokarosserieteiles sollen mit dem erfindungsgemäßen Verfahren Fehlstellen beseitigt werden. Fig. 3 zeigt eine Variante der erfindungsgemäßen Vorrichtung, mit der das erfindungsgemäße Verfahren ausgeführt werden soll.
Die Vorrichtung nach Fig. 3 besteht im wesentlichen aus einer Strahlkammer **7** mit darin angeordneter Strahllanze **14,** einer Dosierschnecke **11,** die über die Schlauchzuleitung **13** mit der Strahllanze **14** in Verbindung steht, einem Bevorratungsbehälter **44** für Strahlmittel **2**, welcher mit der Dosierschnecke **11** über eine Beschickungsleitung 45 verbunden ist, einem Absaugstutzen **21,** der einerends in die Strahlkammer **7** und anderenends über die Schlauchableitung **6** in einen Abscheider **22** führt und aus dem mit diesem saugseitig verbundenen Saugaggregat **3**.
Die Strahlkammer **7** ist -wie Fig. 4 zeigt- aus einem zylindrischen Hülsenkörper **23** gebildet, der einen inneren Aufnahmeraum **24** aufweist. In den inneren Aufnahmeraum **24** ist die dünne Strahllanze **14** entlang der Hülsenachse **B-B** durch eine Bohrung **25** in der oberen Hülsenwandung **26** eingeschoben und in dieser Bohrung mittels einer Schraube klemmend gehalten.
Das der oberen Hülsenwandung **26** gegenüberliegenden Ende des Hülsenkörpers **23** ist offen und weist eine in der Hülsenwandung **27** eingearbeitete Ausnehmung **28** auf, in die ein Blendenkörper **29** eingesetzt ist. Der Blendenkörper **29** verschließt den Aufnahmeraum **24** des Hülsenkörpers **23.** Im Blendenkörper **29** ist eine kreisförmige Öffnung **30** eingearbeitet, welche sich nach innen trichterförmig (konisch) erweitert. Der Blendenkörper **29** besteht aus verschleißfestem Werkstoff, der außenseitig mit einer Magnetfolie **31** versehen ist. Zweckmäßig ist die Magnetfolie **31** auf dem Blendenkörper **29** aufgeklebt und weist ebenso eine Öffnung **32** auf, welche in ihrer Lage mit der Öffnung **30** des Blendenkörpers **29** übereinstimmt.
Die Strahllanze **14** ist soweit in den Aufnahmeraum **24** hineingeschoben, dass die Austrittsöffnung **33** der Strahllanze **14** bis in die Nähe der Öffnung **30** des Blendenkörpers **29** reicht.
Der Absaugstutzen **21** mündet etwas unterhalb der oberen Hülsenwandung **26** mit ausreichendem Abstand zur Austrittsöffnung **33** der Strahllanze **14** in den Hülsenkörper **23**.
Der Antrieb der Dosierschnecke **11** ist über ein Zeitrelais **34** ausschaltbar. Die Dosierschnecke **11** fördert daher nur solange Strahlmittel aus dem Behälter **44** bis das Zeitrelais **34** den Antrieb wieder ausschaltet.
Das erfindungsgemäße Verfahren läuft wie folgt ab. An mehreren lackierten Blechproben wird nach einer Schichtdickenbestimmung diejenige Strahldauer und Strahlmenge an Strahlmittel als Maß für den erforderlichen Energieeintrag in die Fehlstelle bestimmt, die notwendig ist, um beispielsweise die Klarlackschicht und die Basislackschicht bis zum Füller abzutragen. Die Schaltzeit des Zeitrelais **34** der Dosierschnecke **11** wird auf diese bestimmte Zeit eingestellt und die zuvor bestimmte Strahlmenge an Strahlmittel in den Tragluftstrom eingeschleust.

Bei einer Metallic-Lackierung, bestehend aus etwa 18 µm Grundierungsschicht, 25 µm Füller, 12 µm Basislack und 35 µm Klarlack, hat sich eine Schaltzeit von 14 sec und eine Strahlmittelmenge von 7 g mit einer Körnung von 80 µm als vorteilhaft erwiesen.
Nach Ablauf der Schaltzeit schaltet das Zeitrelais **34** die Dosierschnecke **11** ab. Es erfolgt keine Einschleusung des Strahlmittels in den vom Saugaggregat **3** erzeugten Tragluftstrom, der während der stillstehenden Dosierschnecke **11** aufrechterhalten wird und das verbrauchte Strahlmittel durch die Absaugleitung **46** in den Abscheider **22** fördert. Im Abscheider **22** trennt ein Zyklon **47** das Strahlmittel **2** von dem abgetragenen Lack, der vom Saugaggregat **3** in einen Filter **35** entsorgt wird.

Anschließend wird das Strahlergebnis visuell begutachtet und dadurch ermittelt, ob der Einschluss aus der Lackschicht entfernt wurde. Ist dies nicht der Fall, wird die Dosierschnecke **11** wieder eingeschaltet. Die Dosierschnecke fördert sodann wiederum Strahlmittel in den Tragluftstrom solange bis das Zeitrelais **34** die Dosierschnecke **11** abschaltet.

Durch die Änderung von Strahlgut, Strahlzeit und Strahlgutmenge lässt sich der für das Herauslösen des Einschlusses aus der Lackschicht notwendige Energieeintrag sehr genau einstellen und auch dosieren.

### Beispiel 2

Mit dem erfindungsgemäßen Verfahren soll eine zwei gebogene Bleche **48** verbindende Lötnaht **36** eingeebnet und geglättet werden. Lötnähte weisen bedingt durch den Erstarrungsvorgang der Metallschmelze im Nahtbereich immer gewisse Unebenheiten auf, die bei einer nachfolgenden Lackierung zu einer Beeinträchtigung der Gleichmäßigkeit des Lackauftrags im Bereich der Lötnaht führen.

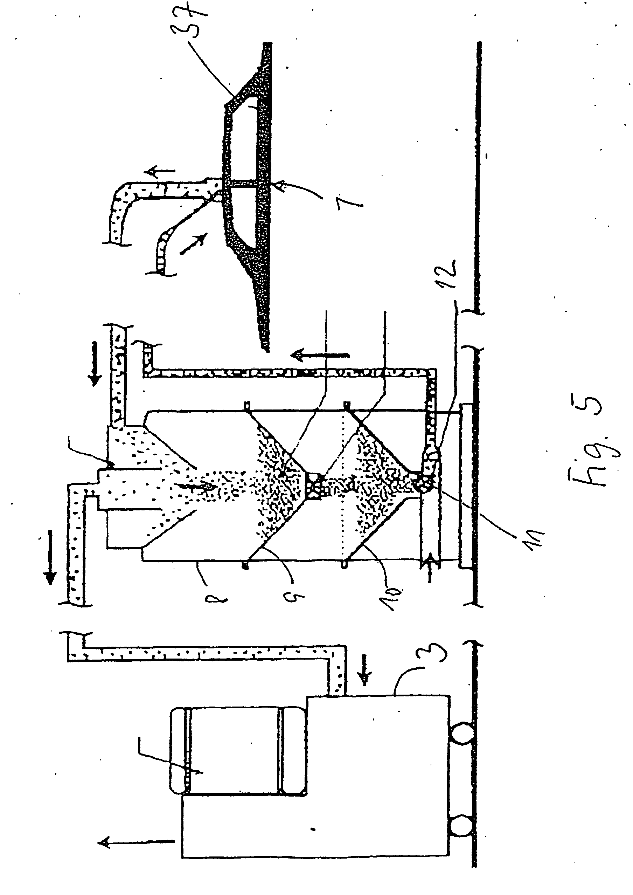

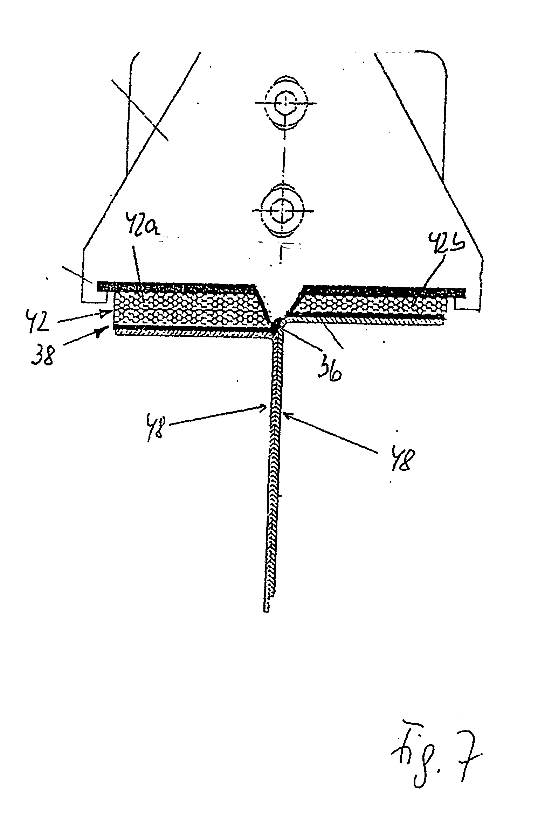

Fig. 5 zeigt eine erfindungsgemäße Vorrichtung zum Glätten von derartigen Lötnähten, die in ihrer Konstruktion dem bereits beschriebenen Systemaufbau entspricht.

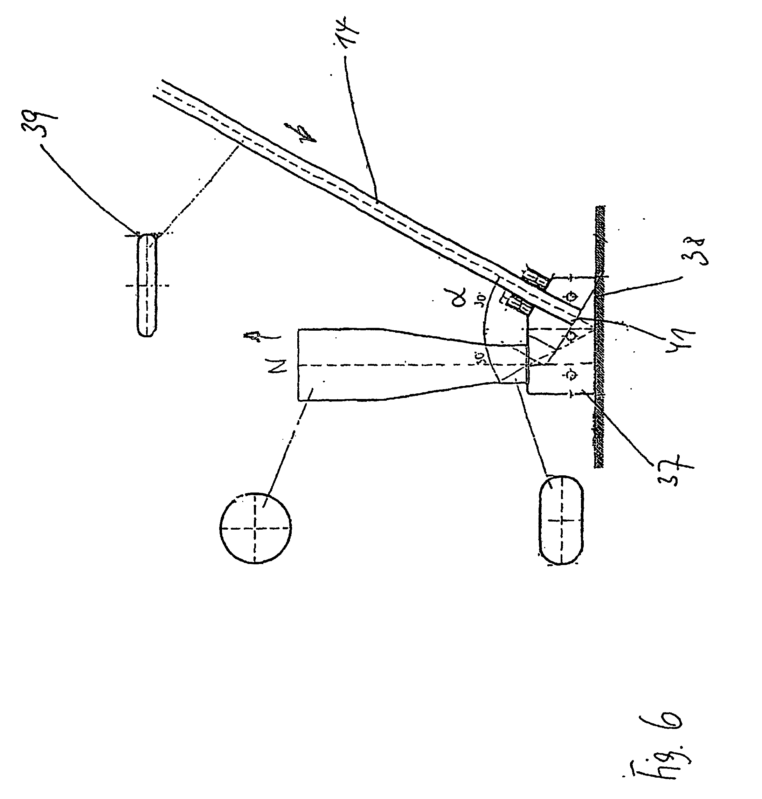

In der Fig. 6 ist die Strahlkammer **7** dargestellt, die aus einem auf die zu bearbeitende Fläche der Lötnaht **36** aufsetzbaren Körper **37,** einer in den Körper **37** bis nahe der Lötnaht **36** unter einem Winkel α zur Flächennormalen **N** der Lötnaht **36** eintauchende Strahllanze **14,** einer Abdeckmaske **38,** die den Körper **37** verschließt und eine der Lötnaht entsprechende spaltförmige Austrittsöffnung **39** für das Strahlmittel besitzt, sowie einen trichterförmig erweiternden Absaugstutzen **40** gebildet ist. Die Strahllanze **14** hat ein spaltförmig ausgebildetes Ende **41**, dessen Längsausdehnung in etwa der Längsausdehnung der Bearbeitungsfläche der Lötnaht 36 entspricht. Dadurch ist gewährleistet, dass die gesamte Bearbeitungsfläche der Lötnaht **36** gleichmäßig mit Strahlmittel beaufschlagt werden kann. Die Strahllanze **14** ist wie bereits zuvor beschrieben mit der Schlauchzuleitung 13 verbunden, in der der eingangs näher beschriebene zusätzliche Injektor **15** angeordnet ist.
Die Abdeckmaske **38** liegt auf einer Schaumgummilage **42** fixiert auf, welche in diesem Beispiel zweigeteilt ist, um die Höhenunterschiede bei im Stoßbereich von Blechkanten verlaufenden Lötnähten **36** ausgleichen zu können (s. Fig. 7). Dazu haben die beiden Teile **42a** und **42b** der Schaumgummilage 42 eine unterschiedliche Dicke. Die Schaumgummilage **42** ist beispielsweise an den Blechteilen durch eine Magnetfolie fixiert, so dass ein problemloses Versetzen entlang der zu bearbeitenden Lötnaht möglich ist. Natürlich kann das Fixieren auch durch mechanisch aufgebrachte Kräfte, durch ein Vakuum oder Adhäsion erfolgen.
Die Schaumgummilage **42** als Verschleißlage sichert den weitgehend luftdichten Abschluss der Strahlkammer **7,** wobei Unebenheiten abgedeckt werden.
In diesem Beispiel arbeitet das erfindungsgemäße Verfahren mit einem Unterdruck von 320 mbar, einem Tragluftstrom von 180 m³/h und mit einer Strahlmittelgeschwindigkeit von etwa 180 m/s.

### Beispiel 3

Es soll eine kontaminierte Betonschicht von einer Betonfläche mit dem erfindungsgemäßen Verfahren abgetragen werden. Der Aufbau der erfindungsgemäßen Vorrichtung entspricht der zuvor beschriebenen Prinzipdarstellung. Der vom Saugaggregat **3** erzeugte Tragluftstrom von etwa 3000 bis 5000 m³/h wird aufgeteilt und mehreren fächerartig zueinander ausgerichteten Strahllanzen **14** durch jeweils separate Schlauchzuleitungen **13** zugeführt. Jede der Schlauchzuleitungen **13** ist mit einem Injektor **15** versehen, der dem Tragluftstrom-Strahlmittel-Gemisch einen zusätzlichen Energieschub zur signifikanten Erhöhung der Strahlgeschwindigkeit versetzt. Alle Strahllanzen **14** führen in eine gemeinsame Strahlkammer **7,** die auf der Betonfläche verschiebbar ist. Das Saugaggregat **3** erzeugt einen Unterdruck von 400 bis 500 mbar und es werden Strahlgeschwindigkeiten von etwa 300 m/s erreicht.
Das Strahlmittel-Betonteilchen-Gemisch gelangt über die Schlauchableitung **6** in den Abscheider **22,** wo das Strahlmittel abgeschieden, gefiltert und dem geschlossenen Kreislauf wieder zugeführt wird.
In einem Feinfilter wird das Strahlmittel von dem abgestrahlten Betonteilchen getrennt. Der Tragluftstrom tritt gereinigt in das Saugaggregat **3** ein.

Mit dem erfindungsgemäßen Verfahren können problemlos Flächenabtragsleistungen von 4,6 m²/h bei einer Abtragsstärke von 10 mm erreicht werden.
Die Abtragstärke kann durch das erfindungsgemäße Verfahren so eingestellt werden, dass bei kontaminierten Betonschichten nur eine den Erfordernissen gerechte Betonmenge abgetragen wird.
Damit wird gesichert, dass nur geringe Betonmassen entsorgt werden müssen bzw. als Sondermüll anfallen.

### Beispiel 4

Mit dem erfindungsgemäßen Verfahren soll die Oberfläche einer Fläche verdichtet werden. Hierzu läuft das erfindungsgemäße Verfahren wie vordem beschrieben ab. Es wird ein Strahlmittel aus Stahl eingesetzt, das bei seinem Auftreffen die Oberfläche verdichtet und damit oberflächlich härtet.

Das Strahlmittel besteht je nach Art des zu verdichtenden Untergrundes beispielsweise aus kugelförmigen Stahlpartikeln mit Durchmessern zwischen 50 µm und 5000 µm. Die Strahlgeschwindigkeiten liegen oberhalb von 250 m/s.

### Beispiel 5

Es soll auf eine zuvor nach Beispiel 4 verdichtete Oberfläche eine Zinkbeschichtung mit dem erfindungsgemäßen Verfahren aufgebracht werden. Als Strahlmittel werden Zinkpartikel mit einer Korngröße von 20 µm verwendet. Diese Partikel werden durch den. Injektor **15** auf eine Geschwindigkeit von 180 m/s beschleunigt. Beim Auftreffen der Zinkpartikel auf die Oberfläche wird die Bewegungsenergie in Wärmeenergie umgewandelt, die ausreicht, eine Zinkschicht auf der Oberfläche auszubilden.

### Aufstellung der verwendeten Bezugszeichen

- Bearbeitungsfläche: 1
- Strahlmittel: 2
- Saugaggregat: 3
- Tragluftstrom: 4
- Saugstutzen: 5
- Schlauchableitung: 6
- Strahlkammer: 7
- Behälter: 8
- Schütt-Trichter in 8: 9, 10
- Dosiereinrichtung, Dosierschnecke: 11
- Dosierinjektor: 12
- Schlauchzuleitung: 13
- Strahllanze: 14
- Injektor: 15
- Mischrohr: 16
- Düsenkörper von 15: 17
- Eintrittsöffnung: 18
- Ende der Schlauchzuleitung 13: 19
- Ansaugring mit Ansaugöffnungen: 20
- Absaugstutzen: 21
- Abscheider, Zyklon: 22
- Zylindrischer Hülsenkörper: 23
- Innerer Aufnahmeraum von 23: 24
- Obere Hülsenwandung: 25
- Bohrung: 26
- Hülsenwandung: 27
- Ausnehmung: 28
- Blendenkörper: 29
- Öffnung: 30
- Magnetfolie: 31
- Öffnung in 31: 32
- Austrittsöffnung von 14: 33
- Zeitrelais: 34
- Filter: 35
- Lötnaht: 36
- Körper von 7: 37
- Abdeckmaske: 38
- Austrittsöffnung in 38: 39
- Absaugstutzen: 40
- Ende von 14: 41
- Verschleißlage, Schaumgummilage: 42
- Teile von 42: 42a, 42b
- Geteilte Magnetfolie: 43
- Bevorratungsbehälter für Strahlmittel: 44
- Beschickungsleitung: 45
- Absaugleitung: 46
- Zyklon im Abscheider: 47
- Düsenkörperachse: A-A
- Hülsenkörperachse: B-B
- Durchmesser des Mischrohrs: d2
- Durchmesser des Endes der Schlauchzuleitung: d3
- Flächennormale der Bearbeitungsfläche: N
- Zusätzlicher Unterdruck im Injektor 15: P_{UI}
- Winkel der Strahllanze: α

## Patentansprüche

1. Verfahren zum Abtragen und/oder Verdichten und/oder Beschichten, von festen Flächen, beispielsweise Entfernen von Lackfehlstellen aus Lackierungen, Glätten von Löt- und Schweißnähten, Abtragen von kontaminierten Betonschichten oder Rostschichten, Härten, Einebnen oder Beschichten von Metallflächen, bei dem ein Strahlmittel in einen durch Unterdruck erzeugten Trägerluftstrom mittels Schwerkraft und/oder Injektorwirkung zudosiert, in einem Schlauchleitungssystem zu einer Strahllanze befördert und auf durch eine Strahlkammer unter Unterdruck gesetzte Bearbeitungsfläche gelenkt, von dort in den Luftstrom zurückbefördert, gereinigt und ggf. im Kreislauf gefahren wird, wobei die Beschleunigung des Strahlmittels durch den Unterdruck erzeugt und die Strahlkammer von Bearbeitungsfläche zu Bearbeitungsfläche verschoben wird, **dadurch gekennzeichnet, dass** dem Strahlmittel mindestens ein zusätzlicher Energieimpuls durch mindestens einen weiteren vom Unterdruck angesaugten, mindestens unter Atmosphärendruck stehenden Gasstrom zum Erreichen einer deutlich über der Strömungsgeschwindigkeit des Trägerluftstromes liegenden Endgeschwindigkeit stromabwärts vom Dosierort erteilt wird, mit der der Energieeintrag in die zu bearbeitende Fläche in Abhängigkeit der Parameter Art und Form der Bearbeitungsfläche und des Strahlmittels, Beladungsgrad des Trägerluftstromes mit Strahlmittel, Unterdruck im Trägerluftstrom, Strahlzeit und Strahltemperatur eingestellt wird.

2. Verfahren nach Anspruch 1, **dadurch gekennzeichnet, dass** der weitere Gasstrom in einzelne Teilströme zerlegt und koaxial zur Strömungsrichtung nach einer Verengung des Strömungsquerschnitts in der Strahllanze dem Tragluftstrom zugeführt wird.

3. Verfahren nach Anspruch 1 oder 2, **dadurch gekennzeichnet, dass** der Unterdruck auf >150 bis 1000 mbar, vorzugsweise 400 bis 700 mbar, und das Strahlmittel auf eine Endgeschwindigkeit von >80 bis 1000 m/s, vorzugsweise 150 bis 330 m/s, eingestellt wird.

4. Verfahren nach Anspruch 1 bis 3, **dadurch gekennzeichnet, dass** als Gasstrom atmosphärische Luft oder Schutzgas, beispielsweise Inertgas, verwendet wird.

5. Verfahren nach Anspruch 1 bis 3, **dadurch gekennzeichnet, dass** der Tragluftstrom 0,1m³/h bis 5000 m³/h beträgt.

6. Verfahren nach Anspruch 1 bis 6, **dadurch gekennzeichnet, dass** der Energieeintrag in die Bearbeitungsfläche zusätzlich durch einen getakteten Impulsbetrieb von Dosierung und Strahlzeit gesteuert wird.

7. Verfahren nach Anspruch 6, **dadurch gekennzeichnet, dass** die Dosierung und die Strahlzeit durch eine Dosiereinrichtung mit einem Zeitrelais gesteuert wird.

8. Verfahren nach Anspruch 1, **dadurch gekennzeichnet, dass** der mit Strahlmittel beladene Tragluftstrom vor Erreichen der Bearbeitungsfläche in separate Teilströme aufgeteilt, jedem dieser Teilströme ein Energieimpuls zugeführt und alle Teilströme simultan über die Bearbeitungsfläche fächerartig geführt werden.

9. Verfahren nach Anspruch 1 bis 8, **dadurch gekennzeichnet, dass** als Strahlmittel Glasbruch, Korund, Zirkonsand, feinkörnige Schlacke bzw. Stahlpartikel oder deren Gemische zum Abtragen verwendet wird.

10. Verfahren nach Anspruch 1 bis 8, **dadurch gekennzeichnet, dass** als Strahlmittel ein kugelförmiges Granulat aus Glas, Stahl, Stahlguss, Keramik, Korund oder deren Gemische mit einer Partikelgröße von 5 bis 5000 µm zum Verdichten verwendet wird.

11. Verfahren nach Anspruch 1 bis 8, **dadurch gekennzeichnet,** das als Strahlmittel Metallpartikel, beispielsweise Zink- Blei- Zinn-, Aluminium-, Magnesiumpartikel oder deren Legierungen, verwendet werden.

12. Vorrichtung zur Durchführung des Verfahrens nach Anspruch 1, mit mindestens einen Behälter für die Bevorratung eines Strahlmittels, einer an den Behälter angeschlossenen Dosier- und/oder Injektoreinrichtung zum Dosieren des Strahlmittels in einen von einem Saugaggregat erzeugten Unterdruckluftstrom, einer mit der Dosier- und/oder Injektoreinrichtung verbundenen Schlauchzuleitung zum Transport des Strahlmittels-Luftstromes in eine zu einer unter Unterduck gesetzten Strahlkammer geführten Strahllanze mit Düse zum Bestrahlen der Bearbeitungsfläche und einer an die Strahlkammer angeschlossenen Schlauchableitung zum Absaugen des Strahlmittels und der abgetragenen Teilchen aus der Strahlkammer in einen Abscheidebehälter und einen Filter, der mit dem Saugaggregat verbunden ist, **dadurch gekennzeichnet, dass** die Strahllanze (14) vor ihrem Eintritt in die Strahlkammer **(7)** stromabwärts von der Dosier- und/oder Injektoreinrichtung **(11)** mit der Schlauchzuleitung **(13)** mindestens einen weiteren Injektor **(15)** zum Erzeugen und Einleiten eines zusätzlichen Energieimpulses durch Ansaugen mindestens eines mindestens unter Atmosphärendruck stehenden Gasstromes auf das Strahlmittel bildet.

13. Vorrichtung nach Anspruch 12, **dadurch gekennzeichnet, dass** die Strahllanze **(14)** mit einem koaxial zur Schlauchzuleitung **(13)** angeordneten, Ansaugöffnungen aufweisenden Ansaugring **(20)** und einem innenliegenden, eine Querschnittsverengung aufweisenden Düsenkörper **(17)** mit Mischrohr **(16)** versehen ist, in den das Ende **(19)** der Schlauchzuleitung **(13)** mittig auf der Düsenkörperachse **(A-A)** bis in den Bereich der maximalsten Querschnittsverengung des Düsenkörpers **(17)** geführt ist.

14. Vorrichtung nach Anspruch 12 oder 13, **dadurch gekennzeichnet, dass** das Verhältnis der inneren Durchmesser von Schlauchzuleitung **(13)** und Düsenkörper **(17)** >1 bis 1000 beträgt.

15. Vorrichtung nach Anspruch 12 **dadurch gekennzeichnet, dass** die Strahlkammer **(7)** aus einem Hülsenkörper **(23)** gebildet ist, in dem die Strahllanze **(14)** in Hülsenachsrichtung **(B-B)** bis nahe eines den Hülsenkörper **(23)** endseitig verschließenden Blendenkörpers **(29)** angeordnet ist, in der eine sich in Flucht der Strahllanze **(14)** in das Innere des Hülsenkörpers **(23)** erweiternde Austrittsöffnung **(30)** mit einem geringen Querschnitt vorgesehen ist, wobei der Blendenkörper **(29)** so auf der Bearbeitungsfläche **(1)** gehalten ist, dass die Austrittsöffnung **(30)** mit der Position des Bearbeitungspunktes übereinstimmt und dass die Schlauchableitung **(6)** senkrecht zur Hülsenachsrichtung **(B-B)** oberhalb der Austrittsöffnung **(30)** angeordnet ist.

16. Vorrichtung nach Anspruch 15, **dadurch gekennzeichnet, dass** die Austrittsöffnung **(30)** im Blendenkörper **(29)** einen Querschnitt von 1 bis 20 mm² aufweist.

17. Vorrichtung nach Anspruch 15 oder 16, **dadurch gekennzeichnet, dass** sich die Austrittsöffnung **(30)** nach innen trichterförmig erweitert.

18. Vorrichtung nach Anspruch 17, **dadurch gekennzeichnet, dass** der Winkel der Austrittsöffnung **(30)** im Blendenkörper **(29)** 90° beträgt.

19. Vorrichtung nach Anspruch 15 bis 18, **dadurch gekennzeichnet, dass** der Blendenkörper **(29)** aus verschleißfestem Werkstoff, wie Keramik oder Stahl, besteht.

20. Vorrichtung nach einem der vorherigen Ansprüche 15 bis 19, **dadurch gekennzeichnet, dass** der Blendenkörper **(29)** in der endseitigen Öffnung **(32)** lösbar eingesetzt ist.

21. Vorrichtung nach Anspruch 15, **dadurch gekennzeichnet, dass** der Blendenkörper **(29)** mit einer Magnetfolie **(31)** an der zu behandelnden Fläche gehalten ist.

22. Vorrichtung nach Anspruch 15, **dadurch gekennzeichnet, dass** der Blendenkörper **(29)** ' durch Vakuum oder mechanische Kräfte an der zu behandelnden Fläche gehalten ist.

23. Vorrichtung nach Anspruch 15, **dadurch gekennzeichnet, dass** der Blendenkörper **(29)** durch Adhäsion, beispielsweise Klebung, um die zu behandelnde Fläche gehalten ist.

24. Vorrichtung nach Anspruch 12 oder 15, **dadurch gekennzeichnet, dass** die Dosiereinrichtung **(11)** eine Schnecke ist, welche mit einem Zeitrelais **(34)** zum Zuund Abschalten der Dosiereinrichtung verbunden ist.

25. Vorrichtung nach Anspruch 12, **dadurch gekennzeichnet, dass** die Strahlkammer **(7)** aus einem quaderförmigen, auf die Bearbeitungsfläche aufsetzbaren Körper **(37)** gebildet ist, in dem die Strahllanze **(14)** unter einem Winkel von 5 bis 179° zur Normalen **(N)** der Bearbeitungsfläche **(1)** bis nahe einer die Bearbeitungsfläche abdeckenden Maske **(38)** mit einer der Bearbeitungsfläche entsprechenden schlitzförmigen Öffnung **(39)** geführt ist und eine Austrittsöffnung **(33)** aufweist, der die Öffnung **(39)** überdeckt, und dass die Absaugöffnung der Schlauchableitung **(6)** in der Flächennormalen **(N)** oberhalb der Bearbeitungsfläche angeordnet ist.

26. Vorrichtung nach Anspruch 25, **dadurch gekennzeichnet, dass** die Maske **(38)** auf einer Verschleißlage **(42)** angeordnet ist, die ihrerseits durch Vakuum, mechanisch wirkende Kräfte, Magnetkräfte oder Adhäsion auf der Bearbeitungsfläche **(1)** gehalten ist.

27. Vorrichtung nach Anspruch 26, **dadurch gekennzeichnet, dass** die Verschleißlage **(42)** den Strahlbereich abgrenzt.

28. Vorrichtung nach Anspruch 26, **dadurch gekennzeichnet, dass** die Verschleißlage **(42)** zweigeteilt ist, wobei deren Teile entlang der Öffnung **(39)** angeordnet sind.

29. Vorrichtung nach Anspruch 26, **dadurch gekennzeichnet, dass** die Teile der Verschleißlage **(42)** eine unterschiedliche Dicke aufweisen.

30. Vorrichtung nach Anspruch 26, **dadurch gekennzeichnet, dass** die Verschleißlage **(42)** aus Gummi, beispielsweise Schaumgummi, besteht.

## Claims

1. Method for abrasion and/or compaction and/or coating solid surfaces, for instance the removal of paint defects from lacquers, the smoothing of solder and welding seams, removal of contaminated concrete layers or rust layers, hardening, leveling or coating of metallic surfaces, in which an abrasive for blasting is metered into a carrier airstream generated by a subatmospheric pressure by means of gravity and/or injector effect, is conveyed to a jet lance in a flexible pipe system and is directed through a blast chamber set on a surface to be treated and maintained under a subatmosperic pressure and from there is returned in the airstream, cleaned and optionally fed in a circulating path, whereby the acceleration of the abrasive for blasting is produced by the suction pressure and the blast chamber is shifted from surface to be treated to surface to be treated, **characterized in that** the abrasive for blasting is given at least an additional energy pulse by at least one further gas stream under atmospheric pressure which is drawn in by subatmosperic pressure to reach an end velocity considerably being above the carrier airstream downstream from the metering location whereby the energy input to the surface to be treated is adjusted with a function of the nature and shape of the surface to be treated as parameters and the abrasive for blasting, the degree in which the carrier air is charged with the abrasive for blasting, the subatmospheric pressure in the carrier airstream, the blasting duration and the blasting temperature.

2. Method according to claim 1, **characterized in that** the further gas stream is divided into individual partial streams and is supplied coaxially to the flow direction after a constriction in the flow cross section in the jet to the carrier airstream.

3. Method according to claim 1 or 2, **characterized in that** the subatmospheric pressure is set to > 150 to 1000 mbar, preferably 400 to 700 mbar and that the abrasive for blasting is adjusted to an end velocity >80 to 1000 m/s, preferably 150 to 330 m/s.

4. Method according to claim 1 to 3, **characterized in that** as gas stream atmospheric air or a protective gas, especially inert gas is used.

5. Method according to claim 1 to 3, **characterized in that** the carrier airstream amounts to 0.1 m³ to 5000 m³/h.

6. Method according to claim 1 to 6, **characterized in that** the energy input into the surfaces to be treated is controlled additionally by a periodic pulse drive for metering and for the blasting duration.

7. Method according to claim 6, **characterized in that** the metering and the blasting duration are controlled with a metering device having a timing relay.

8. Method according to claim 1, **characterized in that** the carrier airstream charged with the abrasive for blasting is distributed, before reaching the surface to be treated, into separate partial streams, each of these partial streams is supplied with an energy pulse and all of the partial streams are simultaneously allied over the surface to be treated in a fan-like manner.

9. Method according to claim 1 to 8, **characterized in that** as abrasive for blasting broken glass, corundum, zirconium sand, fine-grained slag or steel particles or mixtures thereof are used for removal from the treated surface.

10. Method according to claim 1 to 8, **characterized in that** as abrasive for blasting a ball-shaped granulate of glass, steel, cast steel, ceramic, corundum or their mixtures with a particle size of 5 to 5000 µm is used for compaction.

11. Method according to claim 1 to 8, **characterized in that** as abrasive for blasting metal particles, especially zinc, lead, tin, aluminium, magnesium or alloys thereof are used.

12. Device for carrying out the method according to claim 1 which comprises at least one vessel for holding a supply of abrasive for blasting, a metering and/or injector device connected to the vessel for metering the abrasive for blasting into a subatmospheric pressure airstream produced by a suction device, a flexible pipeline connected with the metering and/or injector device for transporting the abrasive for blasting -airstream to a jet lance extending into a blast chamber under subatmospheric pressure and having nozzles for treating the surface to be treated in a flexible pipeline connected to the blast chamber for sucking off the abrasive for blasting and particles removed thereby from the blast chamber and a filter connected with the suction unit, **characterized in that** the jet lance (14) before its entry into the blast chamber (7) is formed with the flexible pipeline (13) at least a further injector (15) downstream from the metering and/or injector device (11) to produce and input an additionally energy pulse into the abrasive for blasting by means of suction of at least gas stream which is at least under atmospheric pressure.

13. Device according to claim 12, **characterized in that** the jet lance (14) has a suction ring (20) arranged coaxially with the hose (13) and having a suction opening and is provided with an inwardly lying nozzle body (17) having a cross section reduction and formed with a mixing tube (16) in which the end (19) of the hose (13) extends centrally along the nozzle body axis (A-A) to the region of the maximum cross section reduction of the nozzle body (17).

14. Device according to claim 12 or 13, **characterized in that** the ratio of the inner diameter of hose (13) and nozzle body (17) amounts >1 to 1000.

15. Device according to claim 12, **characterized in that** the blast chamber is formed from a sleeve body (23) in which the jet lance (14) extends in the direction (B-B) of the sleeve axis too close to a diaphragm body (29) closing the end of the sleeve body (23) and which has an outlet opening (30) registering with the jet lance (14) which widens in the interior of the sleeve body (23) and which has a reduced cross section whereby the diaphragm body (29) is so held on the surface (1) to be treated that the outlet opening (30) coincides with the position of the working point and that the outlet hose (6) is arranged perpendicular to the coaxial direction (B-B) of the sleeve above the outlet opening (30).

16. Device according to claim 15, **characterized in that** the outlet opening (30) in the diaphragm body (29) has a cross section of 1 to 20 mm².

17. Device according to claim 15 or 16, **characterized in that** the outlet opening (30) widens inwardly in a funnel shape.

18. Device according to claim 17, **characterized in that** the angle of the outlet opening (30) in the diaphragm body (29) amounts to 90°.

19. Device according to claim 15 to 19, **characterized in that** the diaphragm body (29) is comprised of a wear-resistant material like a ceramic or steel.

20. Device according to one of the preceding claims 15 to 19, **characterized in that** the diaphragm body (29) is removable received in an opening (32) at the end.

21. Device according to claim 15, **characterized in that** the diaphragm body (29) is held by a magnetic foil (31) to the surface to be treated.

22. Device according to claim 15, **characterized in that** the diaphragm body (29) is held by vacuum or mechanical forces to the surface to be treated.

23. Device according to claim 15, **characterized in that** the diaphragm body (29) is held by adhesion, especially by adhesive bonding, to the surface to be treated.

24. Device according to claim 12 or 15, **characterized in that** the metering device (11) is a worm which is connected with a timing relay (34) for turning on or shutting off the metering device.

25. Device according to claim 12, **characterized in that** the blast chamber (7) is formed from a square shaped body (37) which can be placed upon the surface to be treated in which the jet lance (14) is disposed at an angle of 5 to 179° to a normal (N) of the surface (1) to be treated and extends close to a mask (38) covering the surface to be treated and having a slit-shaped opening (39) corresponding to the treated area, the body (37) having an outlet opening (33) which extends over the opening (39) and that the suction opening of the discharge hose is arranged in the surface normal (N) above the surface to be treated.

26. Device according to claim 25, **characterized in that** the mask (38) is disposed on a wear layer (42) which in turn is held by vacuum, mechanically effected forces, magnetic forces or adhesion on the surface (1) to be treated.

27. Device according to claim 25, **characterized in that** the wear layer (42) limits the blasting area.

28. Device according to claim 26, **characterized in that** the wear layer (42) is bipartite whereby its parts are arranged along the opening (39).

29. Device according to claim 26, **characterized in that** the parts of the wear layer (42) have different thicknesses.

30. Device according to claim 26, **characterized in that** the wear layer (42) is comprised of rubber, especially foam rubber.

## Revendications

1. Procédé d'enlèvement et/ou de compactage et/ou d'enduction de surfaces dures, tel qu'élimination de défauts de laquage de couches de laque, aplatissage de brasures et de soudures, enlèvement de couches contaminées en béton ou de rouille, durcissement, aplanissement ou enduction de surfaces de métal, dans lequel un abrasif est ajouté de manière dosée par l'intermédiaire de la pesanteur et/ou l'effet injecteur dans un courant d'air porteur généré par dépression, est transporté dans un système à conduites en tuyaux souples vers une lance de sablage et est dirigé sur une surface à traiter mise sous dépression par une cabine de sablage, de là il est retransporté dans le courant d'air, est purifié et est, le cas échéant, transporté en cycle, l'accélération de l'abrasif étant générée par la dépression et la cabine de sablage étant déplacée d'une surface à traiter à l'autre, **caractérisé par le fait que** l'on communique à l'abrasif au moins une impulsion supplémentaire d'énergie par au moins un autre courant de gaz au moins sous pression atmosphérique, aspiré par la dépression, pour atteindre une vitesse finale en aval du lieu de dosage qui est sensiblement supérieure à la vitesse d'écoulement du courant d'air porteur et avec laquelle on règle l'entrée (input) d'énergie dans la surface à traiter, en fonction des paramètres suivants : type et forme de la surface à traiter et de l'abrasif, degré auquel le courant d'air porteur est chargé d'abrasif, dépression dans le courant d'air porteur, temps de sablage et température de sablage.

2. Procédé selon la revendication 1, **caractérisé par le fait que** l'autre courant de gaz est divisé en courants partiels individuels et est amené de façon coaxiale à la direction d'écoulement, après un rétrécissement de la section de passage dans la lance de sablage, au courant d'air porteur.

3. Procédé selon la revendication 1 ou 2, **caractérisé par le fait que** la dépression est réglée de manière à être comprise entre > 150 et 1000 mbar, de préférence entre 400 et 700 mbar, et que la vitesse finale de l'abrasif est réglée de manière à être comprise entre > 80 et 1000 m/s, de préférence entre 150 et 330 m/s.

4. Procédé selon la revendication 1 à 3, **caractérisé par le fait que** l'on utilise de l'air atmosphérique ou du gaz protecteur, tel que le gaz inerte, en tant que courant de gaz.

5. Procédé selon la revendication 1 à 3, **caractérisé par le fait que** le courant d'air porteur est de 0,1 m³/h à 5000 m³/h.

6. Procédé selon la revendication 1 à 5, **caractérisé par le fait que** l'entrée (input) d'énergie dans la surface à traiter est commandée en sus par un régime impulsionnel cadencé du dosage et du temps de sablage.

7. Procédé selon la revendication 6, **caractérisé par le fait que** le dosage et le temps de sablage est commandé par un dispositif de dosage présentant un relais temporisé.

8. Procédé selon la revendication 1, **caractérisé par le fait que** le courant d'air porteur chargé d'abrasif est divisé, avant qu'il atteigne la surface à traiter, en courants partiels individuels, qu'à chacun de ces courants partiels est amenée une impulsion d'énergie et que tous les courants partiels sont menés simultanément comme un éventail sur la surface à traiter.

9. Procédé selon la revendication 1 à 8, **caractérisé par le fait que** l'abrasif utilisé pour l'enlèvement est le calcin, le corindon, le sable de zircon, la scorie à grains fins ou bien des particules d'acier ou leurs mélanges.

10. Procédé selon la revendication 1 à 8, **caractérisé par le fait que** l'abrasif utilisé pour le compactage est un granulé sphérique en verre, acier, acier moulé, céramique, corindon ou leurs mélanges, avec une grosseur de particules comprise entre 5 et 5000 µm.

11. Procédé selon la revendication 1 à 8, **caractérisé par le fait que** l'on utilise comme abrasif des particules de métal, par exemple des particules de zinc, de plomb, d'étain, d'aluminium, de magnésium ou leurs alliages.

12. Dispositif pour la mise en oeuvre du procédé selon la revendication 1, avec au moins un réservoir pour le stockage d'un abrasif, un dispositif de dosage et/ou à injecteur raccordé au réservoir et destiné à doser l'abrasif dans un courant d'air à dépression généré par un agrégat d'aspiration, une conduite d'amenée en tuyau flexible reliée au dispositif de dosage et/ou à injecteur et destinée à transporter le courant d'air/abrasif dans une lance de sablage qui est menée vers une cabine de sablage mise sous dépression et qui présente une buse pour le sablage de la surface à traiter, et avec une conduite d'évacuation en tuyau flexible raccordée à la cabine de sablage et destinée à aspirer l'abrasif et les particules enlevées de la cabine de sablage dans un réservoir de séparation et dans un filtre qui est relié au agrégat d'aspiration, **caractérisé par le fait que**, avant son entrée dans la cabine de sablage (7) en aval du dispositif de dosage et/ou à injecteur (11), la lance de sablage (14) forme avec la conduite d'amenée en tuyau flexible (13) au moins un autre injecteur (15) pour générer et introduire une impulsion supplémentaire d'énergie en aspirant vers l'abrasif au moins un courant de gaz au moins sous pression atmosphérique.

13. Dispositif selon la revendication 12, **caractérisé par le fait que** la lance de sablage (14) est pourvue d'un anneau d'aspiration (20) qui est disposé de façon coaxiale à la conduite d'amenée en tuyau flexible (13) et qui présente des ouvertures d'aspiration, ainsi que d'un corps de buse (17) avec un tube mélangeur (16), qui est situé à l'intérieur et présente un rétrécissement de section et dans lequel l'extrémité (19) de la conduite d'amenée en tuyau flexible (13) est menée de manière centrale sur l'axe (A-A) du corps de buse jusque dans la zone du rétrécissement de section le plus grand du corps de buse (17).

14. Dispositif selon la revendication 12 ou 13, **caractérisé par le fait que** le rapport des diamètres intérieurs de la conduite d'amenée en tuyau flexible (13) et du corps de buse (17) est compris entre > 1 et 1000.

15. Dispositif selon la revendication 12, **caractérisé par le fait que** la cabine de sablage (7) est formée par un corps (23) en forme de douille dans lequel la lance de sablage (14) est disposée dans la direction axiale (B-B) de la douille jusqu'à proximité d'un corps en diaphragme (29) qui ferme le corps en douille (23) aux extrémités et dans lequel est prévue une ouverture de sortie (30) à faible section qui s'évase dans l'alignement de la lance de sablage (14) vers l'intérieur du corps en douille (23), ledit corps en diaphragme (29) étant tenu sur la surface à traiter (1) de telle manière que l'ouverture de sortie (30) concorde avec la position du points de traitement et que la conduite d'évacuation en tuyau flexible (6) est disposée verticalement à la direction axiale (B-B) de la douille au-dessus de l'ouverture de sortie (30).

16. Dispositif selon la revendication 15, **caractérisé par le fait que** l'ouverture de sortie (30) dans le corps en diaphragme (29) présente une section comprise entre 1 et 20 mm².

17. Dispositif selon la revendication 15 ou 16, **caractérisé par le fait que** l'ouverture de sortie (30) s'évase en forme d'entonnoir vers l'intérieur.

18. Dispositif selon la revendication 17, **caractérisé par le fait que** l'angle de l'ouverture de sortie (30) dans le corps en diaphragme (29) est de 90°.

19. Dispositif selon la revendication 15 à 18, **caractérisé par le fait que** le corps en diaphragme (29) est fait d'un matériau résistant à l'usure, tel que la céramique ou l'acier.

20. Dispositif selon l'une des revendications précédentes 15 à 19, **caractérisé par le fait que** le corps en diaphragme (29) est placé de manière amovible dans l'ouverture d'extrémité (32).

21. Dispositif selon la revendication 15, **caractérisé par le fait que** le corps en diaphragme (29) est tenu par le biais d'une feuille magnétique (31) sur la surface à traiter.

22. Dispositif selon la revendication 15, **caractérisé par le fait que** le corps en diaphragme (29) est tenu sur la surface à traiter par le vide ou par des forces mécaniques.

23. Dispositif selon la revendication 15, **caractérisé par le fait que** le corps en diaphragme (29) est tenu par adhésion, par exemple par collage, autour de la surface à traiter.

24. Dispositif selon la revendication 12 ou 15, **caractérisé par le fait que** le dispositif de dosage (11) est une vis sans fin qui est reliée à un relais temporisé (34) pour mettre en circuit et déconnecter le dispositif de dosage.

25. Dispositif selon la revendication 12, **caractérisé par le fait que** la cabine de sablage (7) est formée par un corps (37) qui présente la forme d'un parallélépipède rectangle et peut être placé sur la surface à traiter et dans lequel la lance de sablage (14) est guidée à un angle compris entre 5 et 179° par rapport à la normale (N) de la surface à traiter (1) jusqu'à proximité d'une masque (38) couvrant la surface à traiter et présentant une ouverture en forme de fente (39) correspondant à la surface à traiter, ladite lance présentant une ouverture de sortie (33) qui se trouve sur l'ouverture (39), et que l'ouverture d'aspiration de la conduite d'évacuation en tuyau flexible (6) est disposée dans la normale (N) de la surface au-dessus de la surface à traiter.

26. Dispositif selon la revendication 25, **caractérisé par le fait que** la masque (38) est disposée sur une couche d'usure (42) qui, de son côté, est tenue sur la surface à traiter (1) par l'intermédiaire du vide, de forces agissant mécaniquement, de forces magnétiques ou par adhésion.

27. Dispositif selon la revendication 26, **caractérisé par le fait que** la couche d'usure (42) délimite la zone de sablage.

28. Dispositif selon la revendication 26, **caractérisé par le fait que** la couche d'usure (42) est divisée en deux parties, ses parties étant disposées le long de l'ouverture (39).

29. Dispositif selon la revendication 26, **caractérisé par le fait que** les parties de la couche d'usure (42) présentent une épaisseur différente.

30. Dispositif selon la revendication 26, **caractérisé par le fait que** la couche d'usure (42) se compose de caoutchouc, par exemple de caoutchouc mousse.
